# EUROPEAN PATENT APPLICATION

(11) **EP 4 113 656 A1**
(43) Date of publication of application: **04.01.2023**
(21) Application number: 21761860.2
(22) Date of filing: 25.02.2021
(51) Int. Cl.: H01M 4/131, H01M 4/36, H01M 4/38, H01M 4/505, H01M 4/525, H01M 4/62, H01M 10/052, H01M 10/0566

(54) **POSITIVE ELECTRODE FOR SECONDARY BATTERIES, AND SECONDARY BATTERY**

(30) Priority: 28.02.2020 JP 2020034119
(71) Applicant: Panasonic Intellectual Property Management Co., Ltd., Osaka-shi, Osaka 540-6207 (JP)
(72) Inventor: UKA, Youichirou, Osaka-shi, Osaka 540-6207 (JP); OKAZAKI, Tomohisa, Osaka-shi, Osaka 540-6207 (JP)
(74) Representative: Novagraaf International SA
(86) International application number: PCT/JP2021/007139
(87) International publication number: WO 2021/172441

(57) **Abstract**

A positive electrode for a secondary battery includes a positive electrode current collector, and a positive electrode mixture layer containing a positive electrode active material and provided on a surface of the positive electrode current collector, wherein the positive electrode active material contains a lithium-containing composite oxide which has a layered structure, and in the lithium-containing composite oxide, nickel occupies 80 atom % or more of a metal other than lithium, and the positive electrode mixture layer has a carbon fiber having an outermost diameter of 5 nm or less, and the carbon fiber is contained by 0.1 parts by mass or less relative to 100 parts by mass of the positive electrode active material.

## Description

### [Technical Field]

The present disclosure relates to a secondary battery, particularly to an improvement in a positive electrode used for a secondary battery.

### [Background Art]

Secondary batteries, particularly lithium ion secondary batteries, are expected as a power source for small consumer applications, power storage devices, and electric vehicles, because of their high output and high energy density. For positive electrode active materials of lithium ion secondary batteries, a composite oxide of lithium and a transition metal (e.g., cobalt) is used. A high capacity can be achieved by replacing a portion of cobalt with nickel.

Furthermore, recently, to increase the energy density and durability of lithium ion batteries, a positive electrode active material with a high charge/discharge capacity is used in positive electrodes, and the positive electrode active material mounted in a large amount is compressed to increase the amount of the positive electrode active material per unit area.

Patent Literature 1 has proposed a lithium ion secondary battery in which a lithium nickel composite oxide represented by L_{iy}Ni₍₁₋ₓ₎Mₓ and carbon nanotube are included in the positive electrode, and the ratio a/b of the average value "a" of carbon nanotube length relative to the average particle size "b" of primary particles of the lithium nickel composite oxide is 0.5 or more.

### [Citation List]

### [Patent Literature]

Patent Literature 1: WO2008/051667

### [Summary of Invention]

Examples of Patent Literature 1 describe that use of a carbon nanotube with a large diameter of about 20 nm improves cycle characteristics of lithium ion batteries. However, with use of the positive electrode active material used for a high capacity battery in a large amount and the carbon nanotube with a large diameter of about 20 nm for a positive electrode formed by compression, electrochemical reactions tend to be nonuniform. Thus, inconsistent charge/discharge reactions tend to occur in positive electrodes. As a result, cycle characteristics are easily deteriorated.

In particular, when a lithium-transition metal composite oxide is used for a positive electrode active material and the Ni ratio in the lithium-transition metal composite oxide is increased to achieve a high capacity, with occurrence of charge/discharge reaction inconsistency in a part of a region in the positive electrode, the structure may change, by excessive taking of Li in the part of the region, to a crystal structure which hardly allows for storage and release of Li ions. As a result, reduction in cycle characteristics may easily be significant.

An aspect of the present disclosure relates to a positive electrode for a secondary battery including a positive electrode current collector, and a positive electrode mixture layer containing a positive electrode active material and provided on a surface of the positive electrode current collector, wherein the positive electrode active material contains a lithium-containing composite oxide which has a layered structure, and in the lithium-containing composite oxide, nickel occupies 80 atom % or more of metal atoms other than lithium, and the positive electrode mixture layer has a carbon fiber having an outermost diameter of 5 nm or less, and the carbon fiber is contained by 0.1 parts by mass or less relative to 100 parts by mass of the positive electrode active material.

Another aspect of the present disclosure relates to a secondary battery including the above-described positive electrode for a secondary battery, a separator, a negative electrode facing the positive electrode for a secondary battery through the separator, and an electrolyte.

The present disclosure realizes a secondary battery with both a high energy density and excellent cycle characteristics.

### [Brief Description of Drawings]

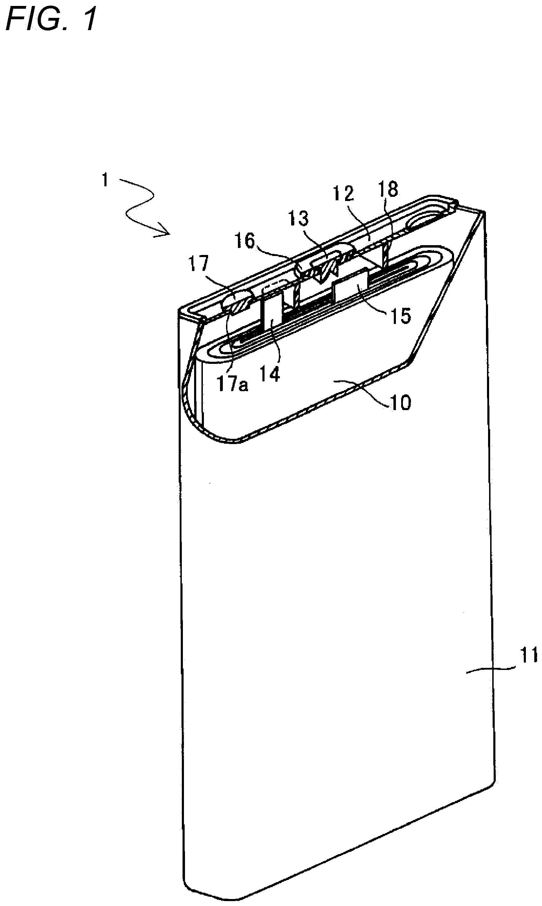

[FIG.1] FIG.1 is a schematic partially cutaway oblique view of a secondary battery in an embodiment of the present disclosure.

### [Description of Embodiments]

A positive electrode for a secondary battery of the embodiment of the present disclosure includes a positive electrode current collector, and a positive electrode mixture layer containing a positive electrode active material and provided on a surface of the positive electrode current collector. The positive electrode active material includes a lithium-containing composite oxide which has a layered structure. In the lithium-containing composite oxide, nickel occupies 80 atom % or more of metal atoms other than lithium. The positive electrode mixture layer includes a carbon fiber having an external diameter of 5 nm or less.

The positive electrode for a secondary battery of this embodiment contains a small amount of a carbon fiber with a small external diameter in the positive electrode mixture layer, which allows for improvement in liquid flowability, and even when a lithium-containing metal oxide having a Ni ratio of 0.8 or more is used for the positive electrode active material, excellent cycle characteristics can be maintained.

Carbon fiber forms conductive paths between the particles of the positive electrode active material, and can be added to the positive electrode mixture layer as a conductive agent for increasing the electrical conductivity of the positive electrode mixture layer. The carbon fiber has a fiber length of, for example, 1 µm or more. That is, the carbon fiber has a significantly high aspect ratio (ratio of fiber length relative to external diameter of fiber). By the presence of the carbon fiber with excellent electrical conductivity between the positive electrode active material particles, potential variations between the positive electrode active material particles can be reduced, and nonhomogeneous charge/discharge reactions can be suppressed. Furthermore, the carbon fiber with a large aspect ratio occupies a small volume in the positive electrode mixture layer, and therefore reduction in liquid flowability is suppressed, even when the carbon fiber is present in the gaps between the positive electrode active material particles that are supposed to be filled with the electrolyte. Also, being fibrous, even when the positive electrode active material is densely packed in the positive electrode mixture layer, gaps between the electrolyte can be easily secured. As a result, reduction in cycle characteristics can be significantly suppressed.

Also, the above-described carbon fiber only occupies a small volume in the positive electrode mixture layer, and therefore the positive electrode mixture layer excluding the carbon fiber can be mostly made up of the positive electrode active material. Thus, by increasing the positive electrode mixture layer thickness, and/or increasing the positive electrode active material amount per positive electrode area by compression, a high capacity positive electrode can be easily obtained.

The carbon fiber content relative to 100 parts by mass of the positive electrode active material can be 0.1 parts by mass or less. The carbon fiber content relative to 100 parts by mass of the positive electrode active material can be 0.01 parts by mass or more and 0.1 parts by mass or less, 0.02 parts by mass or more and 0.1 parts by mass or less, or 0.02 parts by mass or more and 0.05 parts by mass or less. The above-described carbon fiber content is a value based on the mass of the positive electrode active material in a discharged state.

The positive electrode active material content of the positive electrode mixture layer can be determined from a mixture sample obtained by disassembling a secondary battery in a discharged state, washing the obtained positive electrode with an organic solvent, drying under vacuum, and removing only the mixture layer. By performing thermal analysis such as TG-DTA and the like on the mixture sample, the ratio of the binder component and the conductive agent component, other than the positive electrode active material can be calculated. When the binder component and the conductive agent component contain several types of carbon materials, the ratio of the carbon fiber therein can be calculated by performing microscopic Raman spectroscopy on the cross sections of the positive electrode mixture layer.

The external diameter and the fiber length of the carbon fiber can be determined by image analysis using a scanning electron microscope (SEM). For example, the fiber length can be determined by measuring the length and diameter by randomly selecting a plural number of (e.g., about 100 to 1000) carbon fibers, and averaging them. The fiber length of the carbon fiber means the length in a linear state.

The carbon fiber may be, for example, carbon nanotube. The carbon nanotube can be a single wall, double wall, or multi wall carbon nanotube, but preferably, a single wall carbon nanotube is used because a great effect can be achieved with a small amount. The carbon nanotube with a fiber diameter of 5 nm or less includes many single wall carbon nanotubes. The single wall carbon nanotube can be 50 mass% or more of the entire carbon nanotube. Preferably, the carbon fiber has a fiber length of 1 µm or more, in view of securing electron conductivity inside the positive electrode. Meanwhile, there is no upper limit for the fiber length if they are appropriately arranged inside the positive electrode, and generally, in view of the particle size of the positive electrode active material being 1 µm or more and 20 µm or less, an appropriate length can be about the same. That is, the carbon fiber has a fiber length of, for example, 1 µm or more and 20 µm or less. For example, when a plural number of (e.g., 100 or more) carbon fiber is randomly selected in the positive electrode mixture layer, 50% or more of the carbon fiber may have a fiber length of 1 µm or more, or 1 µm or more and 20 µm or less. 80% or more of the carbon fiber may have a fiber length of 1 µm or more, or 1 µm or more and 20 µm or less.

To achieve a high capacity, the positive electrode mixture layer is provided (applied) on the surface of the positive electrode current collector in an amount of 250 g/m² or more per unit area. With this embodiment, even when the positive electrode mixture amount is increased and the positive electrode active material amount is increased in this way, inconsistent charge/discharge reactions are suppressed, and reduction in cycle characteristics can be suppressed.

For the positive electrode active material, to achieve a high capacity, 85 atom % or more of the metal other than lithium in the above-described lithium-containing composite oxide can be nickel. With this embodiment, even when the Ni ratio is increased in the positive electrode active material, the inconsistent charge/discharge reactions can be suppressed, and reduction in cycle characteristics can be suppressed.

Next, a secondary battery of the embodiment of the present disclosure is described. The secondary battery includes, for example, the following positive electrode, a negative electrode, an electrolyte, and a separator.

### [Positive Electrode]

The positive electrode has a positive electrode current collector and a positive electrode mixture layer formed on a surface of the positive electrode current collector and having a positive electrode active material. For the positive electrode, the above-described positive electrode for a secondary battery is used. The positive electrode mixture layer can be formed by applying a positive electrode slurry in which a positive electrode mixture containing a positive electrode active material, a binder, and the like is dispersed in a dispersion medium on a surface of a positive electrode current collector and drying the slurry. The dried film may be rolled, if necessary. The positive electrode mixture layer may be formed on one surface of the positive electrode current collector, or may be formed on both surfaces thereof.

The positive electrode mixture layer includes a positive electrode active material, and a carbon fiber having an outermost diameter of 5 nm or less as essential components. The carbon fiber having an outermost diameter of 5 nm or less is contained in the positive electrode mixture layer as a conductive agent. Another conductive agent different from the carbon fiber having an outermost diameter of 5 nm or less can be contained in the positive electrode mixture layer. The positive electrode mixture layer can contain, as optional components, a binder, a thickener, and the like. For the binder, thickener, and the other conductive agent, known materials can be used.

For the positive electrode active material, a lithium-containing composite oxide having a layered structure (e.g., rock salt type crystal structure) containing lithium and a transition metal can be used. To be specific, the lithium-containing composite oxide is a lithium-nickel composite oxide represented by, for example, LiₐNiₓM₁₋ₓO₂ (where 0 < a ≤ 1.2, 0.8 ≤ x < 1, M is at least one selected from the group consisting of Co, Al, Mn, Fe, Ti, Sr, Na, Mg, Ca, Sc, Y, Cu, Zn, Cr, and B). Among these, M preferably includes at least one selected from the group consisting of Co, Mn, and Fe. From the viewpoint of stabilities of the crystal structure, Al may be contained as M. Note that the value "a" indicating the molar ratio of lithium is increased or decreased by charging and discharging. For a specific example of such a composite oxide, a lithium-nickel-cobalt-aluminum composite oxide (LiNi_{0.9}Co_{0.05}Al_{0.05}O₂, etc.) is used.

In the above-described lithium-nickel composite oxide, with a high Ni ratio of x, many lithium ions can be taken from the lithium-nickel composite oxide during charging, which allows for a high capacity. However, in the lithium-nickel composite oxide with a high capacity, the valency of Ni tends to be high. As a result, the crystal structure tends to be unstable especially in a fully charged state, and the crystal structure tends to change (inactivated) into a structure in which reversible storage and release of lithium ions is difficult by repeated charge and discharge. As a result, cycle characteristics are easily deteriorated. In particular, when a configuration is used in which the positive electrode mixture layer has a large thickness and/or the positive electrode active material amount per unit area is increased by compressing the mixture layer, the flow of lithium ions and/or electrons may be easily inhibited during charge/discharge reactions, which may easily cause inconsistent charge/discharge reactions. When an inconsistent charge/discharge reaction occurs, inactivation of the crystal structure progresses in a portion of the region where charge reactions excessively progressed or a large amount of lithium ions are taken, and cycle characteristics may be reduced.

However, with the positive electrode for a secondary battery of this embodiment, by including a carbon fiber having an outermost diameter of 5 nm or less in the positive electrode mixture layer, even when the amount of the positive electrode mixture layer provided (applied) per unit area is increased (e.g., to 250 g/m² or more), inconsistent charge/discharge reactions are suppressed. Thus, even when a lithium-containing composite oxide with a high Ni ratio x is used, reduction in cycle characteristics is suppressed. Thus, a secondary battery with excellent cycle characteristics and a high energy density can be achieved.

In view of achieving a high capacity, the lithium-containing composite oxide has a Ni ratio x of 0.85 or more (x ≥ 0.85), or 0.9 or more (x ≥ 0.9).

The shape and thickness of the positive electrode current collector can be selected from the shapes and ranges according to the negative electrode current collector. Examples of the material for the positive electrode current collector include stainless steel, aluminum, aluminum alloy, titanium, or the like.

### [Negative Electrode]

The negative electrode includes, for example, a negative electrode current collector, and a negative electrode active material layer formed on the surface of the negative electrode current collector. The negative electrode active material layer can be formed, for example, by applying a negative electrode slurry in which a negative electrode mixture including the negative electrode active material, binder, and the like is dispersed in a dispersion medium on a surface of the negative electrode current collector and drying the slurry. The dried film may be rolled, if necessary. That is, the negative electrode active material can be a mixture layer. A lithium metal foil or a lithium alloy foil may be attached to the negative electrode current collector. The negative electrode active material layer may be formed on one surface of the negative electrode current collector, or may be formed on both surfaces thereof.

The negative electrode active material layer contains a negative electrode active material as an essential component, and as an optional component, a binder, a conductive agent, a thickener, and the like can be included. For the binder, conductive agent, and thickener, known materials can be used.

The negative electrode active material contains a material that electrochemically stores and releases lithium ions, a lithium metal, and/or a lithium alloy. For the material that electrochemically stores and releases lithium ions, a carbon material, an alloy, and the like are used. Examples of the carbon material include, for example, graphite, graphitizable carbon (soft carbon), and non-graphitizable carbon (hard carbon). Preferred among them is graphite, which is excellent in stability during charging and discharging and has small irreversible capacity. For the alloy based material, a material containing at least one metal that forms an alloy with lithium can be used, and examples thereof include silicon, tin, a silicon alloy, a tin alloy, and a silicon compound. Silicon oxides or tin oxides of these bonded with oxygen can be used.

For the alloy based material containing silicon, for example, a silicon composite material in which a lithium ion conductive phase and silicon particles dispersed in the lithium ion conductive phase can be used. For the lithium ion conductive phase, for example, a silicon oxide phase, a silicate phase, and/or a carbon phase can be used. A main component (e.g., 95 to 100 mass%) of the silicon oxide phase can be silicon dioxide. Preferably, among these, a composite material composed of a silicate phase and silicon particles dispersed in the silicate phase is preferable because it has a high capacity and a small irreversible capacity.

The silicate phase may include, for example, at least one selected from the group consisting of Group 1 element and Group 2 element of the long-form periodic table. Examples of Group 1 element and Group 2 element of the long-form periodic table include lithium (Li), potassium (K), sodium (Na), magnesium (Mg), calcium (Ca), strontium (Sr), barium (Ba), and the like. Other elements may include aluminum (Al), boron (B), lanthanum (La), phosphorus (P), zirconium (Zr), titanium (Ti), etc. In particular, the silicate phase containing lithium (hereinafter also referred to as lithium silicate phase) is preferable because of its small irreversible capacity and high initial charge/discharge efficiency.

The lithium silicate phase may be any oxide phase containing lithium (Li), silicon (Si), and oxygen (O), and may include other elements. The atomic ratio O/Si of O to Si in the lithium silicate phase is, for example, larger than 2 and less than 4. Preferably, O/Si is larger than 2 and less than 3. The atomic ratio Li/Si of Li to Si in the lithium silicate phase is, for example, larger than 0 and less than 4. The lithium silicate phase may have a composition represented by the formula Li_{2z}SiO_{2+z} (0 < z < 2). Preferably, the relation 0 < z < 1 is satisfied, and z=1/2 is more preferable. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), etc.

The carbon phase can be composed of, for example, amorphous carbon which is less crystalline. The amorphous carbon may be, for example, hard carbon, soft carbon, or something else.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy, or the like can be exemplified.

### [Electrolyte]

The electrolyte includes a solvent and a solute dissolved in the solvent. The solute is an electrolytic salt that goes through ion dissociation in electrolytes. The solute may include, for example, a lithium salt. The component of the electrolyte other than the solvent and solute is additives. The electrolyte may contain various additives.

For the solvent, an aqueous solvent or a nonaqueous solvent is used. As the nonaqueous solvent, for example, a cyclic carbonic acid ester, a chain carbonic acid ester, a cyclic carboxylic acid ester, a chain carboxylic acid ester, or the like is used. Examples of the cyclic carbonic acid ester include propylene carbonate (PC), ethylene carbonate (EC), vinylene carbonate (VC), and the like. Examples of the chain carbonic acid ester include diethyl carbonate (DEC), ethyl methyl carbonate (EMC), dimethyl carbonate (DMC), and the like. Examples of the cyclic carboxylic acid ester include γ-butyrolactone (GBL) and γ-valerolactone (GVL). Examples of the chain carboxylic acid ester include methyl acetate, ethyl acetate, propyl acetate, methyl propionate (MP), ethyl propionate (EP), and the like. The non-aqueous solvent may be used singly, or two or more kinds thereof may be used in combination.

Examples of the nonaqueous solvent also include cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl-furan, 1,8-cineol, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxyethane, 1,2-dibutoxy ethane, diethylene glycol dimethylether, diethylene glycol diethyl ether, diethylene glycol dibutyl ether, 1,1-dimethoxy methane, 1,1-diethoxy ethane, triethylene glycol dimethylether, tetraethylene glycol dimethyl ether, and the like.

These solvents may be a fluorinated solvent in which part of the hydrogen atoms is substituted with a fluorine atom. Fluoro ethylene carbonate (FEC) may be used as the fluorinated solvent.

Examples of the lithium salt include a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN (C₂F₅SO₂)₂, etc.), a lithium halide (LiCl, LiBr, Lil, etc.) and the like. The lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. By adjusting the lithium salt concentration within the above-described range, an electrolyte with excellent ion conductivity and suitable viscosity can be produced. However, the lithium salt concentration is not limited to the above-described concentration.

The electrolyte may contain other known additives. Examples of the additive include 1,3-propanesultone, methylbenzenesulfonate, cyclohexylbenzene, biphenyl, diphenyl ether, and fluorobenzene.

### [Separator]

A separator is interposed between the positive electrode and the negative electrode. The separator is excellent in ion permeability and has suitable mechanical strength and electrically insulating properties. The separator may be, for example, a microporous thin film, a woven fabric, or a nonwoven fabric. The separator is preferably made of, for example, polyolefin, such as polypropylene and polyethylene.

In an example structure of the secondary battery, an electrode group and a nonaqueous electrolyte are accommodated in an outer package, the electrode group having a positive electrode and a negative electrode wound with a separator interposed therebetween. Alternatively, instead of the wound-type electrode group, other forms of electrode groups may be applied, such as a laminated electrode group in which the positive electrode and the negative electrode are laminated with a separator interposed therebetween. The secondary battery may be any shape of, for example, a cylindrical shape, a rectangular shape, a coin-shape, a button shape, or a laminate shape.

FIG.1 is a schematic perspective partially cutaway oblique view of a prismatic secondary battery according to an embodiment of the present disclosure.

A nonaqueous electrolyte secondary battery 1 includes a bottomed rectangular battery case 11, an electrode group 10 and a nonaqueous electrolyte accommodated in the battery case 11. The electrode group 10 has a negative electrode in the form of a long strip, a positive electrode in the form of a long strip, and a separator interposed therebetween for preventing direct contact therebetween. The electrode group 10 is formed by winding the negative electrode, the positive electrode, and the separator around a flat core and removing the core.

One end of the negative electrode lead 15 is attached to the negative electrode current collector of the negative electrode by welding, etc. One end of the positive electrode lead 14 is attached to the positive electrode current collector of the positive electrode by welding, etc. The other end of the negative electrode lead 15 is electrically connected to a negative electrode terminal 13 provided in the sealing plate 12. A gasket 16 is disposed between the sealing plate 12 and the negative electrode terminal 13 to insulate therebetween. The other end of the positive electrode lead 14 is connected to a sealing plate 12, and electrically connected to the battery case 11 also working as the positive electrode terminal. At the upper part of the electrode group 10, a resin made frame 18 is arranged to isolate the electrode group 10 from the sealing plate 12 and to isolate the negative electrode lead 15 from the battery case 11. Then, the opening of the battery case 11 is sealed with a sealing plate 12. The sealing plate 12 is formed with an injection hole 17a, and the electrolyte is injected into the rectangular battery case 11 from the injection hole 17a. Afterwards, the injection hole 17a is plugged with a sealing plug 17.

The structure of the secondary battery may be cylindrical, coin-shaped, button-shaped, or the like having a metallic battery case, or may be a laminated battery having a laminated sheet battery case made of a laminated body of a barrier layer and a resin sheet. In the present disclosure, the type, shape, and the like of the secondary battery are not particularly limited.

The present disclosure will be described in detail below with reference to Examples and Comparative Examples. The present disclosure, however, is not limited to the following Examples.

### <Examples 1 to 7>

### [Negative Electrode Production]

A silicon composite material and graphite were mixed at a mass ratio of 5:95, and used as a negative electrode active material. The negative electrode active material, sodium carboxy methylcellulose (CMC-Na), styrene-butadiene rubber (SBR), and water were mixed at a predetermined mass ratio to prepare a negative electrode slurry. Next, the negative electrode slurry was applied to a surface of copper foil as the negative electrode current collector, and the coating was dried and then rolled to form negative electrode mixture layers on both surfaces of the copper foil.

### [Positive Electrode Production]

For the positive electrode active material, the lithium-containing composite oxide shown in Table 1 was used. The positive electrode active material, carbon nanotube (CNT), polyvinylidene fluoride, N-methyl-2-pyrrolidone (NMP) were mixed at a predetermined mass ratio to prepare a positive electrode slurry. Next, the positive electrode slurry was applied to the surface of aluminum foil as a positive electrode current collector, and the coating film was dried, and then rolled to form a positive electrode mixture layer on both surfaces of the aluminum foil. For the carbon nanotube, the carbon nanotube having an average diameter of 1.5 nm and a length of about 1 µm to 5 µm was used.

### [Preparation of Electrolyte]

To a solvent mixture containing ethylene carbonate (EC) and ethyl methyl carbonate (EMC) at a volume ratio of 3:7, LiPF₆ was added as a lithium salt to prepare an electrolyte. The concentration of LiPF₆ in the nonaqueous electrolyte solution was set to 1.0 mol/liter.

### [Secondary Battery Production]

A lead tab was attached to the positive electrode and negative electrode, and an electrode group was produced by winding the positive electrode and negative electrode in a spiral shape with a separator interposed so that the leads were positioned at the outermost peripheral portion. The electrode group was inserted into an outer case made of a laminate film having aluminum foil as a barrier layer, and dried under vacuum at 105°C for 2 hours, and afterwards, the nonaqueous electrolyte was injected, the opening of the outer case was sealed, thereby producing a secondary battery.

### <Comparative Examples 1 to 4 >

In the production of the positive electrode, acetylene black (average particle size about 20 nm) (AB) in a particle state was added instead of carbon nanotube, thereby preparing a positive electrode slurry.

Except for this, a secondary battery was produced in the same manner as in Examples.

Table 1 shows the composition of the lithium-containing composite oxide used as the positive electrode active material, the amount of the conductive agent (carbon nanotube or acetylene black) added, and the amount of the positive electrode mixture layer applied per unit area, and the density in Examples 1 to 7 and Comparative Examples 1 to 4. In Table 1, the batteries A1 to A7 correspond to Examples 1 to 7, and the batteries B 1 to B4 correspond to Comparative Examples 1 to 4, respectively.

### [Evaluation]

### (Initial Charge and Discharge)

The batteries obtained above were subjected to constant current charging until the voltage reached 4.2 V at a current of 0.5 It, and thereafter, subjected to constant voltage charging at a constant voltage of 4.2 V until the current reached 0.02 It in an environment of 25°C. Afterwards, constant current discharging was performed at a current of 1.0 It until the voltage reached 2.5 V to obtain an initial capacity C₀. Charging and discharging were performed in an environment of 25°C.

### (Capacity deterioration amount)

The batteries were allowed to stand for 10 minutes between charging and discharging, and charge/discharge were repeated 30 cycles in an environment of 25°C under the above-described charge/discharge conditions, and discharge capacity C₁ at the 100th cycle was obtained. The ratio of discharge capacity C₁ relative to the initial discharge capacity Co, R₁ = Ci/Co is regarded as capacity retention rate, and the deterioration amount Dₓ of the batteries was evaluated as Dₓ = 1-R₁.

Table 1 shows the ratio D₁, setting the deterioration amount Dₓ of the battery B1 as 100 as the capacity deterioration amount of the batteries A1 to A7 and B1 to B4, the composition of the positive electrode active material and the conductive agent in the batteries, and the positive electrode mixture layer density. Table 1 shows that in the batteries A1 to A7, in which a small amount of carbon nanotube was added as the carbon fiber having an outermost diameter of 5 nm or less, the increase in capacity deterioration amount D₁ is suppressed , compared with the batteries B1 to B4, in which non-fibrous acetylene black was added instead of the carbon nanotube.

Comparing the battery B2 with B3, the battery B2 with a higher positive electrode mixture layer volume density has a large capacity deterioration amount D₁. This is probably because the battery B2 has a thinner positive electrode mixture layer thickness compared with that of the battery B3, the liquid flowability is reduced, and inconsistent charge/discharge reactions are likely to occur. Comparing the battery B2 with the battery B4, the battery B2 with a larger amount of the positive electrode mixture layer applied had a larger capacity deterioration amount D₁. This is probably because the battery B2 has a larger amount of the positive electrode active material and has a thicker positive electrode mixture layer compared with that of the battery B4, and therefore inconsistent charge/discharge reactions are likely to occur.

On the other hand, comparing the battery A2 with the battery A5, the battery A2 with a larger positive electrode mixture layer volume density also maintained a low capacity deterioration amount. Comparing the battery A3 with the battery A4, the battery A3 with a larger amount of the positive electrode mixture layer applied also maintained a low capacity deterioration amount.

**[Table 1]**

| Battery | Positive Electrode Active Material | Conductive agent | | Positive electrode mixture layer | | Capacity Deterioration Amount D₁ |
|---|---|---|---|---|---|---|
| | | Material | Amount added (parts by mass relative to 100 parts by mass of Positive Electrode Active Material) | Amount applied /[g/m³] | Density /[g/cm³] | |
| A1 | LiNi_{0.88}Co_{0.09}Al_{0.03}O₂ | CNT | 0.04 | 300 | 3.6 | 55 |
| A2 | LiNi_{0.9}Co_{0.05}Al_{0.05}O₂ | CNT | 0.04 | 300 | 3.6 | 77 |
| A3 | LiNi_{0.9}Co_{0.05}Al_{0.05}O₂ | CNT | 0.05 | 300 | 3.6 | 72 |
| A4 | LiNi_{0.9}Co_{0.05}Al_{0.05}O₂ | CNT | 0.05 | 250 | 3.6 | 63 |
| A5 | LiNi_{0.9}Co_{0.05}Al_{0.05}O₂ | CNT | 0.04 | 300 | 3.5 | 66 |
| A6 | LiNi_{0.9}Co_{0.05}Al_{0.05}O₂ | CNT | 0.1 | 300 | 3.6 | 70 |
| A7 | LiNi_{0.9}Co_{0.05}Al_{0.05}O₂ | CNT | 0.01 | 250 | 3.5 | 81 |
| B1 | LiNi_{0.88}Co_{0.09}Al_{0.03}O₂ | AB | 1.0 | 300 | 3.6 | 100 |
| B2 | LiNi_{0.9}Co_{0.05}Al_{0.05}O₂ | AB | 1.0 | 300 | 3.6 | 108 |
| B3 | LiNi_{0.9}Co_{0.05}Al_{0.05}O₂ | AB | 1.0 | 300 | 3.5 | 103 |
| B4 | LiNi_{0.9}Co_{0.05}Al_{0.05}O₂ | AB | 1.0 | 250 | 3.6 | 94 |

### [Industrial Applicability]

With the secondary battery of the present disclosure, a secondary battery with a high capacity and also with excellent cycle characteristics can be provided. The secondary battery according to the present disclosure is useful for a main power source of a mobile communication device, a portable electronic device, or the like.

### [Reference Signs List]

1 Nonaqueous Electrolyte Secondary Battery
10 Electrode Group
11 Battery Case
12 Sealing Plate
13 Negative Electrode Terminal
14 Positive Electrode Lead
15 Negative Electrode Lead
16 Gasket
17 Sealing Plug
17a Injection hole
18 Frame

## Claims

1. A positive electrode for a secondary battery comprising a positive electrode current collector, and a positive electrode mixture layer containing a positive electrode active material and provided on a surface of the positive electrode current collector, wherein
the positive electrode active material contains a lithium-containing composite oxide which has a layered structure and contains nickel that occupies 80 atom % or more of metal atoms therein other than lithium, and
the positive electrode mixture layer contains a carbon fiber having an outermost diameter of 5 nm or less, in an amount of 0.1 parts by mass or less relative to 100 parts by mass of the positive electrode active material.

2. The positive electrode for a secondary battery of claim 1, wherein the positive electrode mixture layer contains the carbon fiber having a fiber length of 1 µm or more.

3. The positive electrode for a secondary battery of claim 1 or 2, wherein the carbon fiber content relative to 100 parts by mass of the positive electrode active material is 0.01 parts by mass or more and 0.05 parts by mass or less.

4. The positive electrode for a secondary battery of any one of claims 1 to 3, wherein the lithium-containing composite oxide is a lithium-nickel composite oxide represented by a Chemical Formula LiₐNiₓM₁₋ₓO₂ (where 0 < a ≤ 1.2, 0.8 ≤ x < 1, M is at least one selected from the group consisting of Co, Al, Mn, Fe, Ti, Sr, Na, Mg, Ca, Sc, Y, Cu, Zn, Cr, and B).

5. The positive electrode for a secondary battery of claim 4, wherein in the Chemical Formula, x ≥ 0.85.

6. The positive electrode for a secondary battery of any one of claims 1 to 5, wherein the positive electrode mixture layer is provided on a surface of the positive electrode current collector in an amount of 250 g/m² or more.

7. The positive electrode for a secondary battery of any one of claims 1 to 6, wherein the carbon fiber includes a single wall carbon nanotube.

8. A secondary battery comprising the positive electrode for a secondary battery of any one of claims 1 to 7, a separator, a negative electrode facing the positive electrode for a secondary battery through the separator, and an electrolyte.

9. The secondary battery of claim 8, wherein the negative electrode comprises a negative electrode current collector, and a negative electrode active material layer containing a negative electrode active material and formed on a surface of the negative electrode current collector, and
the negative electrode active material contains a silicon composite material.
